# EUROPEAN PATENT APPLICATION

(11) **EP 2 104 171 A1**
(43) Date of publication of application: **23.09.2009**
(21) Application number: 08005363.0
(22) Date of filing: 20.03.2008
(51) Int. Cl.: H01M 8/02

(54) **Deformable glass based composite seal for high temperature application**

(71) Applicant: The Technical University of Denmark, 2800 Kgs. Lyngby (DK)
(72) Inventor: Larsen, Peter Halvor, 4000 Roskilde (DK); Menon, Mohan, 2640 Hedehusene (DK)
(74) Representative: Grünecker, Kinkeldey, Stockmair & Schwanhäusser Anwaltssozietät

(57) **Abstract**

The present invention provides a sealing composition, comprising glass particles coated with particles of a ceramic material and/or a metallic material, wherein the average particle size of said glass particles is at least ten times the particle size of said particles of the ceramic material or the metallic material.

Further provides is solid oxide cell stack, comprising an electrolyte layer, a cathode layer, an anode layer, and a sealing layer,
wherein the sealing layer is the above sealing layer.

The invention also provides a method of producing said solid oxide cell stack, employing the above sealing composition.

## Description

### Technical Field

The present invention relates to a glass based composite sealing composition for solid oxide cell (SOC) stacks, which are thermodynamically stable over a wide temperature operational range and oxygen partial pressure range, and to a method for preparing a sealed SOC stack.

### Background art

Solid oxide cells (SOCs) generally include cells designed for different applications, such as solid oxide fuel cells (SOFCs) or solid oxide electrolysis cells (SOECs). Due to their common basic structure, the same cell may, for example, be used in SOFC applications as well as SOEC applications. Since in SOFCs fuel is fed into the cell and converted into power, while in SOECs power is applied to produce fuel, these cells are often referred to as 'reversible' SOCs.

Solid oxide cells may have various designs. Typical configurations include an electrolyte layer being sandwiched between two electrodes. During operation of the cell, usually at temperatures of about 500°C to about 1100°C, one electrode is in contact with oxygen or air, while the other electrode is in contact with a fuel gas.

The most common manufacture processes suggested in the prior art comprise the manufacture of single cells. Generally, a support is provided, on which an electrode layer is formed, followed by the application of an electrolyte layer. The so formed half cell is dried and afterwards sintered, in some cases in a reducing atmosphere. Finally, a second electrode layer is formed thereon so as to obtain a complete cell. Alternatively, one of the electrode layers or the electrolyte layer may be used as a support layer, having a thickness of about 300 µm or more.

Under typical operating conditions, a single cell produces less than 1 volt. To obtain high voltage and power from the SOCs, it is therefore necessary to stack many cells together. The most common manufacturing method for SOC planar stacks comprises the manufacture of single cells. The cells are subsequently stacked together with interconnects, current collectors, contact layers and seals. After assembly, the stacks are consolidated/sealed by heat treatment under a vertical load to ensure sealing as well as electrical contact between the components. Gas tight sealings are virtually important for the performance, durability and safely operation of a fuel cell stack.

Silica based glass is suitable as a sealing material for SOCs since the physical and chemical properties of glass can be tailored within a wide range. Different glass and glass-ceramic compositions have been examined within the group of alkali silicate, alkali aluminosilicates, alkaline earth silicates, alkaline earth aluminoborosilicates, and borosilicate glasses. However, even though promising results have been reported, none of them have been able to fulfill all the requirements of mechanical performance, e.g. viscosity and match of thermal expansion and chemical compatibility, e.g. wetting and bonding, at the same time.

Composite seals with crystalline filler materials dispersed into base glass, e.g. alkali borosilicate glass, or into sodium aluminosilicate glass, have shown promising results in relation to exact matching the thermal expansion coefficient (TEC) between the sealant and the seal surfaces. At the same time, suitable viscosities at the sealing temperature have been obtained.

However, an optimization of the bonding of the seal to metal surfaces is still required, and particularly a bonding to the corrosion scales formed on the metal surfaces as these depend on operation temperature, composition and microstructure of the pristine metals. Insufficient bonding results in cracks or gaps in the sealing, depending on the size, can either result in an inferior performance or failure of the stack.

Bonding between the metal and a glass based seal has been demonstrated, cf. *Yang, Z.; Coyle, C.A.; Baskaran, S.; Chick, L.A. "Making metal-to-metal and metal-to-ceramic interconnections for use in high temperature electrochemical devices by forming bond coat on first metal part, applying sealing material to bond coat, and adhering second part to sealing material"* US 2004060967-A1*,* by forming a single element metallic bond coat (M = Fe, Ni or Co) or by the preferred solution where a composite bond coat phase (M-CrAlY) is applied to the metallic surface prior to adhering the seal and further elements. The alumina content of the bond coat, either stemming from the steel or from the bond coat, is claimed to be essential for the bond coat performance. However, a seal providing good bonding while at the same time exactly matching the thermal expansion coefficient (TEC) between the sealant and the seal surfaces has not been achieved up to date.

In order to tailor the properties of the polymeric silica glass, network modifiers and network formers are added to the glass structure during melting. For example, Na containing compounds are added to increase the thermal expansion coefficient and Al containing compounds are added to balance the charge and thereby to avoid the bond breaking action of the Na, i.e. to prevent a depolymerisation of the SiO₄⁴⁻ tetrahedra in the glass network. However, the conditions at the fuel gas electrode during operation of the cell are very important for the glass seals because some components in the glass, for example SiO₂ and Na₂O, may react with water and hydrogen and form volatile phases with a high vapor pressure. Said phases may then be transported into the adjacent electrode layers and are deposited at the reactive sites, thereby blocking these sites. Thus, the performance of the electrode decreases over time due to the decrease of active sites. The above effect is especially critical in SOECs.

In the prior art, it has further been suggested to add ceramic filler material to glass sealing compositions. However, the added ceramic filler material is added in form of relatively large, irregular grains, which act as gravel in the composite, and thereby to a large extend prevent the deformability of the composite seal. The fillers are generally added to adjust the TEC of the seal to that of the SOC. Inorganic fillers in larger quantities however prevent the formation of a sealing layer, and may lead to channels and cavities in the sealing layer, preventing the required gas tightness of the sealing layer.

### Object of the present invention

In view of the disadvantages of the prior art, it is therefore the object of the present invention to provide an improved glass based sealing composition for SOC stacks ensuring excellent sealing properties, the stacks having excellent durability and life time, the formed seal providing sufficient bonding properties, at the same time preventing impurities migrating from the sealing layer into adjacent layers of the cell stack, and to provide a method for preparing SOC stacks using said sealing composition.

### Summary

The above object is achieved by a sealing composition for solid oxide cell stacks, comprising glass particles coated with particles of a ceramic material and/or a metallic material, wherein the average particle size of said glass particles is at least ten times the particle size of said particles of the ceramic material or the metallic material.

The above object is further achieved by a solid oxide cell stack, comprising an electrolyte layer, a cathode layer, an anode layer, and a sealing layer,
wherein the sealing layer is the above sealing layer.

The above object is moreover achieved by a method of producing said solid oxide cell stack, comprising the steps of:
- providing at least two SOC cells comprising an electrolyte layer sandwiched by electrode layers or electrode precursor layers;
- stacking at least two cells so as to form a cell stack; and
- sealing said cell stack with a sealing composition,
wherein the sealing composition is the above sealing composition.

Preferred embodiments are set forth in the subclaims and the following detailed description of the invention.

### Brief description of the drawings

Figure 1 illustrates schematically the sealing process of the glass based sealing composition of the present invention.
Figure 2 illustrates the sealing areas in a flat plate SOC with internal manifolding.
Figure 3 illustrates schematically the layers and sealing areas in a planar SOC stack.
Figure 4 illustrates a cross section of a SOC together with interconnects and glass sealing.

### Detailed description of the invention

The present invention provides a sealing composition for solid oxide cell stacks, comprising glass particles coated with particles of a ceramic material and/or a metallic material, wherein the average particle size of said glass particles is at least ten times the particle size of said particles of the ceramic material or the metallic material.

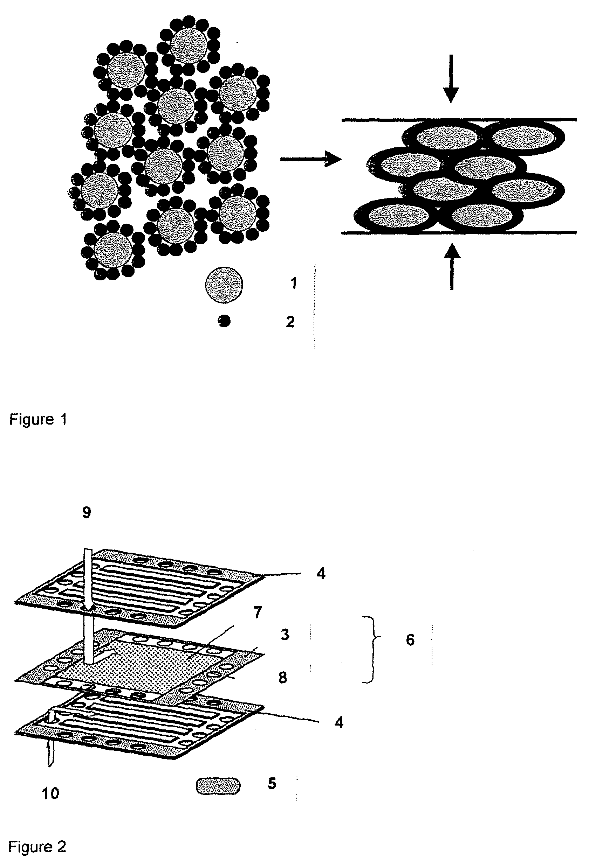

The sealing composition of the present invention comprises glass particles which are 'deformable' under sealing conditions. The deformability of the glass phase is unique and is required to ensure a good sealing of an SOC stack. Deformability in the sense of the present invention refers to the glass particles softening under sealing conditions, i.e. under elevated temperature and pressure, so that a compact seal can be formed, as illustrated in Figure 1. More specifically, the glass particles (1) change from a solid state to a viscous state and are then shapeable, or formable, to form a sealing layer in between the respective two components of the stack, filling all eventual cavities. A dense crystalline surface layer is obtained which is thermodynamically stable at the operating temperatures of the cell and under the oxygen partial pressures employed.

The glass particles (1) are furthermore coated with ceramic particles and/or metallic particles (2), which during the heating step of the seal will cover most if not all of the glass phase without interfering with the deformability and the sealing properties of the glass phase at all, as illustrated in Figure 1. Thus, during operation of the cell stack, water and hydrogen do not come in contact with the glass material and do not react to form volatile phases. In return, migration of species out of the sealing layer into the electrode layer is effectively prevented.

### - Coating of the glass particles

The coating of the glass particles may be achieved using various chemical or colloidal techniques known in the art, or by spray drying of glass particles suspended in a precursor solution of the ceramic material. In order to ensure deformability of the ceramic particles, an organic binder is preferably coated onto the surface of the particles. If present, the organic binder ensures flowability and 'deformability' of the ceramic particles during the startup of the stack, enabling the sealing particles to shift into their preferred position. Once the temperature exceeds about 400°C, the binder will be burnt out, and further deformation of the sealing particles proceeds when the glass starts to soften and becomes viscous. More specifically, the 'deformability' of the ceramic particles in the sense of the present invention refers to the ceramic particles which are located on the glass particles being able to reorganize on the surface of the glass particles to a certain extent so as to allow for a coating as well on parts which are more contracted as well as on parts which expand during the sealing step.

The above described principle is schematically illustrated in Figure 1. The composite material is initially placed in the respective sealing areas of the cell stack. During a subsequent heating treatment, the glass particles (1) will 'deform' under the load of the cell stack, and the rounded ceramic and/or metallic particles (2) will allow the deformation and redistribution of material to take place. After the deformation, further heat treatment will cause grain growth and sintering of the ceramic particles. The glass core of the composite seal will thus be encapsulated by a ceramic and/or metallic layer, and contact of the glass core with H₂O or H₂ from the fuel gas is effectively prevented.

Preferably, the ceramic material is also used to control the overall thermal expansion coefficient (TEC) of the composite seal.

In the present invention, the ceramic particles are employed in form of relatively small and rounded or spherical particles and allow for deformability of the glass particles and effectively coat the deformed particles, thereby providing excellent sealing properties of the layer by suppressing vapour phase transport of species from the glass sealing phase, thereby enhancing durability of SOFC and SOEC stacks.

Preferably, the particles of the ceramic material are selected from the group consisting of doped or un-doped zirconia, alumina, ceria, aluminum oxide, magnesium oxide, titanium oxide, CGO, NiAl₂O₄ etc, and mixtures thereof. Also preferred is the particles of the metallic material being selected from the group consisting of Fe_{1-x-y}CrₓMa_{y} alloys, wherein Ma is Ni, Ti, Ce, Mn, Mo, W, Co, La, Y, or Al, and mixtures thereof. In the formula, x is from 0 to 1, preferably from 0.1 to 0.9, and more preferably from 0.2 to 0.8. Y is from 0 to 1, preferably from 0.1 to 0.9, and more preferably from 0.2 to 0.8. Furthermore, x + y ≤ 1.

The composition preferably comprises the ceramic and/or metallic particles in an amount of from 5 to 50 vol percent, based on the overall volume of the composition, and more preferably in an amount of from 10 to 30 vol percent. Less amount of ceramic and/or metallic filler results in an insufficient coating of the glass particles, while an excess results in a limited deformability of the glass particles.

### - Glass particles

The glass particles are preferably silica based glass particles. According to the invention the base glass powder is preferably selected from the group consisting of alkali aluminosilicates, (NAS), alkaline earth aluminoborosilicates, (B/CAS), and phosphate glasses, (MAP), to which metal oxides may be added, such as magnesium oxide.

Alkali aluminosilicates, (NAS), suitable for use in the present invention comprise 10-25 mole% sodium oxide, 40-80 mole% silicon dioxide, 5-20 mole% aluminum oxide, and may optionally comprise 0-10 mole% boric oxide, 0-10 mole% magnesium oxide, 0-10 mole% calcium oxide, 0-10 mole% barium oxide, 0-2 mole% fluorine, and 0-5 mole% phosphor oxide.

Alkaline earth aluminoborosilicates (CAS), suitable for use in the present invention comprise 40-80 mole% silicon dioxide, 5-20 mole% aluminum oxide, 20-45 mole% calcium oxide, and may optionally comprise 0-5 mole% sodium oxide, 0-10 mole% boric oxide, 0-10 mole% magnesium oxide, 0-2 mole% barium oxide, 0-2 mole% fluorine, and 0-5 mole% phosphor oxide.

Phosphate glasses (MAP) suitable for the present invention comprise 5-25 mole% aluminum oxide, 10-30 mole% magnesium oxide, 5-20 mole% calcium oxide, 40-60 mole% phosphor oxide and may optionally comprise 0-5 mole% sodium oxide, 0-12 mole% silicon dioxide, 0-10 mole% boric oxide, 0-5 mole% barium oxide, and 0-2 mole% fluorine.

Table 1 illustrates the compositional range for the base glasses used as defined above.

**Table 1.**

| Mole % | "NAS" | "MAP" | "CAS" |
|---|---|---|---|
| Sodium oxide | 10-25 | 0-5 | 0-5 |
| Silicon dioxide | 40-80 | 0-12 | 40-70 |
| Aluminium oxide | 5-20 | 5-25 | 5-20 |
| Boric oxide | 0-10 | 0-10 | 0-10 |
| Magnesium oxide | 0-10 | 10-30 | 0-10 |
| Calcium oxide | 0-10 | 5-20 | 20-45 |
| Barium oxide | 0-10 | 0-5 | 0-2 |
| Fluorine | 0-2 | 0-2 | 0-2 |
| Phosphor oxide | 0-5 | 40-60 | 0-5 |

Suitable glass particles include CAS-1, NAS-1 and NAS-2, and BAS-1. For low temperature applications "MAP" glasses may also be applied.

**Table 2**

| Mole % | CAS-1 | NAS-1 | NAS-2 | BAS-1 |
|---|---|---|---|---|
| Sodium oxide | 0,5 | 17,8 | 12,5 | |
| Silicon dioxide | 39,4 | 72,8 | 75,0 | 30 |
| Aluminium oxide | 10,1 | 9,4 | 12,5 | 10 |
| Boric oxide | 4,5 | | | 15 |
| Magnesium oxide | 4,6 | | | |
| Calcium oxide | 40,1 | | | |
| Barium oxide | | | | 40 |
| Fluorine | 0,8 | | | |
| Lanthanum oxide | | | | 5 |

The glass particles preferably have an average particle diameter of from 10 to 1000 µm, more preferably of from 30 to 800 µm, and most preferably of from 50 to 700 µm. Furthermore, the average particle size of said glass particles is at least ten times, more preferably 15 times, and most preferably 20 the particle size of the particles of the ceramic material or the metallic material. The particle size is measured by a laser scattering technique. Details of this method can be found in cf., Reed, James S, "Principles of ceramic processing" 2nd edition, published by Wiley Interscience, 1995.

The composition preferably comprises the glass particles in an amount of from 50 to 95 vol percent, based on the overall volume of the composition, and more preferably in an amount of from 70 to 90 vol percent.

### - Optional additives

The glass composition may further comprise additives which as usual in the art in amounts of up to 5 vol percent, such as V, Zr, Ti, Zn, La.

In a preferred embodiment, the composition is a suspension comprising a solvent with a high boiling point, such as terpineol, dowanol, or butanol. Preferably, the solid content of the composition is from 50 to 90 weight percent, more preferably of from 60 to 80 weight percent.

### -Cell stack

In another embodiment, the present invention provides a solid oxide cell stack, comprising an electrolyte layer, a cathode layer, an anode layer, and a sealing layer, wherein the sealing layer is the above described sealing layer. Advantageously, due to the glass seal being covered by the metallic or ceramic particles, during the operation of the cell water and hydrogen do not come in contact with the glass material and do not react to form volatile phases. In return, migration of species out of the sealing layer into the electrode layer is effectively prevented.

### - Method of the invention

The present invention also provides a method of producing the above solid oxide cell stack, comprising the steps of:
- providing at least two SOC cells comprising an electrolyte layer sandwiched by electrode layers or electrode precursor layers;
- stacking at least two cells so as to form a cell stack; and
- sealing said cell stack with a sealing composition,
wherein the sealing composition is the above described sealing composition.

Preferably, the sealing composition is applied by screen printing. Also preferred is the sealing composition being applied in form of sheets. Alternatively, the sealing composition may preferably be applied by dip coating the respevtive sealing areas into a suspension comprising the coated glass particles, followed by drying and a heat treatment.

Figure 2 illustrates the sealing areas in a flat plate SOC stack with internal manifolding. The respective areas on the electrolyte layer (3) and the respective areas on the separators (4) are sealed with the sealing composition. The layers may preferably be manufactured individually and the sealing composition is screen printed on the respective areas (5) prior to assembling the stack. Each cell (6) to be stacked further comprises a fuel electrode (7) and an air electrode (8). In the final stack, fuel gas (9) and air (10) are provided via the manifolds to the respective electrodes as indicated by the arrows.

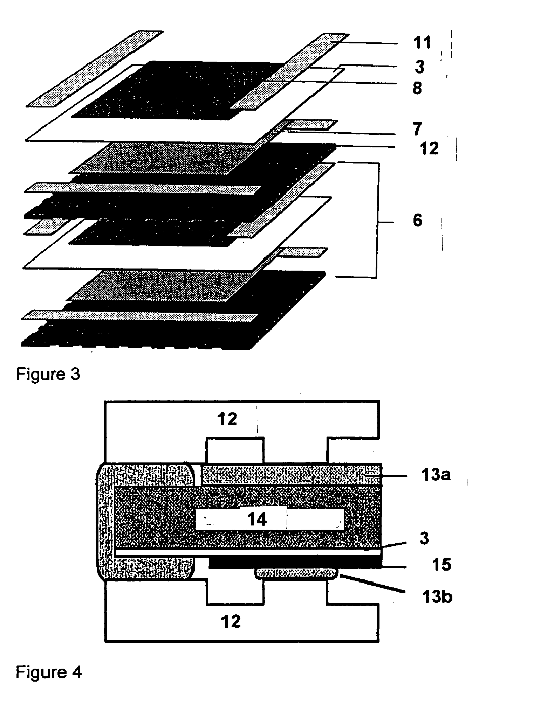

Figure 3 illustrates schematically the various layers and sealing areas in another embodiment of a planar SOC stack in accordance with the present invention. As shown in the exploded view, the sealing composition is preferably pressed into sheets or foils (11), which are cut into the respective size, and then the stack is assembled accordingly. The cell stack also comprises interconnects (12) in between each single cell (6). The interconnects are preferably formed from a metal or metal alloy.

Figure 4 illustrates a cross section of a SOC together with interconnects (12) and a glass sealing. The electrolyte (3) is sandwiched by electrodes (14, 15). In between the interconnects (12), cell comprises additional contact layers (13a, 13b). The sealing composition is formed around the electrode (14) to seal off the stack. In this embodiment, electrode (14) is illustrated as a relatively thick layer which functions not only as an electrode layer but also as a support layer, providing enhanced mechanical stability. The additional function as a support layer is not mandatory, and the cell may of course not comprise a support layer at all. Alternatively, the cell may comprise a separate support layer on the anode or cathode side, or any one of the electrode layers or the electrolyte layer may function as a support layer.

The sealing step of the stack in accordance with the present invention is carried out under elevated temperatures, depending on the specific components used, particularly the base glass powder. Preferred temperatures for the bonding are from 400°C to 1100°C. It is also preferred to select the temperature to be from around 200°C above the glass transition temperature in question and even more preferred from around 100°C above the glass transition temperature in question.

The present invention will now be described by the following examples. The invention is however intended to be not limited thereto.

### Examples

### Example 1: Seals prepared by YSZ-spray coated glass beads

### Step 1: Coating of glass beads

A 0.5M precursor solution of Y_{0.06}Zr_{0.94}O₂ (YSZ) was prepared by dissolving appropriate amounts of zirconyl acetate and yttrium acetate in deionized water. Ethylene glycol was added to the solution, and the solution was heated to 50°C. Glass beads (CAS-1), 10 µm in diameter, were suspended in this solution and the solution spray dried. The glass beads were thus coated with the YSZ precursor solution.

### Step 2: Shaping of the seal

Coated glass seals were suspended in terpineol and screen printed in appropriate dimensions. These seals were then used in fabrication of the SOEC stack.

### Example 2: Seals prepared by YSZ particles coated glass beads

### Step 1: Coating of YSZ particles

YSZ powders were suspended in a binder solution (ethanol + polyvinylbutyral) and spray dried. The resulting agglomerates were ball milled such that the median particle diameter was 0.25 µm.

### Step 2: Coating of glass beads

Suspensions with positively charged glass beads were prepared by suspending 10 µm glass beads (CAS-1) in water mixed with 1 wt% (glass basis) polyethyleneimine (PEI). Suspensions with the negatively charged YSZ particles from step 1 were prepared by suspending YSZ particles in water at a pH of 9 by addition of NH₄OH. These two suspensions were mixed under light stirring. The negatively charged YSZ particles were attracted to the positively charged glass particles and were adsorbed on them. The suspension was then spray dried and the coated glass beads were used for shaping of the seal.

### Step 3: Shaping of the seal

Coated glass seals were suspended in terpineol and screen printed in appropriate dimensions. These seals were then used in the fabrication of the SOEC stack.

### Example 3: Seals prepared pressing powders into bars

### Step 1: Coating of glass beads

Glass beads were coated as described above in Examples 1 and 2.

### Step 2: Shaping of the seal

Seals were prepared by pressing the powders from step 1 into the required shape in form of bars, using a steel pressing mould. The pressed sealing compositions were used for the fabrication of a SOC stack, as illustrated in Figure 3.

### Example 4: High temperature sealing glass - NAS-2 glass coated with YSZ

### Step 1: Coating of YSZ particles

YSZ powders were suspended in a binder solution (ethanol + polyvinylbutyral) and spray dried. The resulting agglomerates were ball milled such that the median particle diameter was 0.5 µm.

### Step 2: Coating of the glass beads

Glass with a transition temperature around 1000°C, based on a composition of NaAlSl₃O₈ (NAS-2) was coated with an YSZ layer. Suspensions with positively charged glass beads were prepared by suspending 20 µm glass beads in water mixed with 1 wt% (glass basis) polyethyleneimine (PEI). Suspensions with negatively charged YSZ particles obtained in step 1 were prepared by suspending the particles prepared in step 1 in water at a pH of 9 by addition of NH₄OH. These two suspensions were mixed under light stirring. The negatively charged YSZ particles were attracted to the positively charged glass particles and were adsorbed on them. The suspension was then spray dried and the coated glass beads were used for shaping of the seal.

### Step 3: Shaping of the seal

Coated glass seals were suspended in terpineol and screen printed in appropriate dimensions. These seals were then used in fabrication of the SOEC stack.

### Example 5: High temperature sealing glass - NAS-2 glass coated with xMgO*Al₂O₃ particles

### Step 1: Coating of Al₂O₃ particles

Al₂O₃ powder was suspended in a binder solution (ethanol + polyvinylbutyral) and spray dried. The resulting agglomerates were ball milled such that the median particle diameter was 0.5 µm.

### Step 2: Coating of glass beads

Glass with a transition temperature around 1000°C, based on a composition of NaAlSi₃O₈ (NAS-2) was coated with an Al₂O₃ layer. Suspensions with positively charged glass beads were prepared by suspending 20 µm glass beads in water mixed with 1 wt% (glass basis) polyethyleneimine (PEI). Suspensions with negatively charged Al₂O₃ particles (particles from step 1) were prepared by suspending particles prepared in step 1 in water at a pH of 9 (by addition of NH₄OH). These two suspensions were mixed under light stirring. The negatively charged particles were attracted to the positively charged glass particles and were adsorbed on them. The suspension was then spray dried and the coated glass beads were used for shaping of the seal.

### Step 3: Shaping of the seal

Coated glass seals were suspended in terpineol and screen printed in appropriate dimensions. These seals were then used in fabrication of the SOEC stack.

### Example 6: Low temperature glass - NAS-1 coated with a mixture of 35 vol% MgO and 65 vol% MgAl₂O₄

### Step 1: Coating of MgO/MgAl₂O₄ particles

The powders were suspended in a binder solution (ethanol + polyvinylbutyral) and spray dried. The resulting agglomerates were ball milled such that the median particle diameter was 0.5 µm.

### Step 2: Coating of glass beads

NAS-2 glass with a transition temperature around 700°C was coated with an oxide layer with matched thermal expansion coefficient (TEC). Suspensions with negatively charged glass beads were prepared by suspending 30 µm glass beads in water mixed with 1 wt% (glass basis) Darvan C. Suspensions with positively charged particles (particles from step 1) were prepared by suspending particles prepared in step 1 in water at a pH of 6 (by addition of CH₃COOH). These two suspensions were mixed under light stirring. The positively charged particles were attracted to the negatively charged glass particles and were adsorbed on them. The suspension was then spray dried and the coated glass beads were used for shaping of the seal.

### Step 3: Shaping of the seal

Coated glass seals were suspended in terpineol and screen printed in appropriate dimensions. These seals were then used in fabrication of the SOEC stack.

### Example 7: Seal based on BAS-1 coated with MqO

### Step 1: Coating of MgO particles

MgO powders were suspended in a binder solution (ethanol + polyvinylbutyral) and spray dried. The resulting agglomerates were ball milled such that the median particle diameter was 0.5 µm.

### Step 2: Coating of glass beads

BAS-1 glass was coated with an Mg-oxide layer with matched thermal expansion coefficient (TEC). Suspensions with negatively charged glass beads were prepared by suspending 30 µm glass beads in water mixed with 1 wt% (glass basis) Darvan C. Suspensions with positively charged MgO particles (particles from step 1) were prepared by suspending particles prepared in step 1 in water at a pH of 6 (by addition of CH₃COOH). These two suspensions were mixed under light stirring. The positively charged particles were attracted to the negatively charged glass particles and were adsorbed on them. The suspension was then spray dried and the coated glass beads were used for shaping of the seal.

### Step 3: Shaping of the seal

Coated glass seals were suspended in terpineol and screen printed in appropriate dimensions. These seals were then used in fabrication of the SOEC stack.

### Example 8: Seal based on BAS-1 coated with MgAl₂O₄

### Step 1: Coating of MgAl₂O₄ particles

MgAl₂O₄ powders were suspended in a binder solution (ethanol + polyvinylbutyral) and spray dried. The resulting agglomerates were ball milled such that the median particle diameter was 0.5 µm.

### Step 2: Coating of glass beads

BAS-1 glass was coated with an oxide layer. Suspensions with positively charged glass beads were prepared by suspending 20 µm glass beads in water mixed with 1 wt% (glass basis) polyethyleneimine (PEI). Suspensions with negatively charged particles (particles from step 1) were prepared by suspending particles prepared in step 1 in water at a pH of 9 (by addition of NH₄OH). These two suspensions were mixed under light stirring. The negatively charged Al₂O₃ particles were attracted to the positively charged glass particles and were adsorbed on them. The suspension was then spray dried and the coated glass beads were used for shaping of the seal.

### Step 3: Shaping of the seal

Coated glass seals were suspended in terpineol and screen printed in appropriate dimensions. These seals were then used in fabrication of the SOEC stack.

### Example 9: Seal based on BAS-1 coated with TiO₂

### Step 1: Coating of TiO₂ particles

TiO₂ powders were suspended in a binder solution (ethanol + polyvinylbutyral) and spray dried. The resulting agglomerates were ball milled such that the median particle diameter was 0.5 µm.

### Step 2: Coating of glass beads

BAS-1 glass was coated with an oxide layer with Ti-oxide. Suspensions with positively charged glass beads were prepared by suspending 20 µm glass beads in water mixed with 1 wt% (glass basis) polyethyleneimine (PEI). Suspensions with negatively charged TiO₂ particles (particles from step 1) were prepared by suspending particles prepared in step 1 in water at a pH of 9 (by addition of NH₄OH). These two suspensions were mixed under light stirring. The negatively charged TiO₂ particles were attracted to the positively charged glass particles and were adsorbed on them. The suspension was then spray dried and the coated glass beads were used for shaping of the seal.

### Step 3: Shaping of the seal

Coated glass seals were suspended in terpineol and screen printed in appropriate dimensions. These seals were then used in fabrication of the SOEC stack.

### Example 10: Seal based on CAS-1 coated with NiAl₂O₄

### Step 1: Coating of NiAl₂O₄ particles

NiAl₂O₄ powders were suspended in a binder solution (ethanol + polyvinylbutyral) and spray dried. The resulting agglomerates were ball milled such that the median particle diameter was 0.5 µm.

### Step 2: Coating of glass beads

Suspensions with positively charged glass beads (CAS-1) were prepared by suspending 20 µm glass beads in water mixed with 1 wt% (glass basis) polyethyleneimine (PEI). Suspensions with negatively charged NiAl₂O₄ particles (particles from step 1) were prepared by suspending particles prepared in step 1 in water at a pH of 9 (by addition of NH₄OH). These two suspensions were mixed under light stirring. The negatively charged NiAl₂O₄ particles were attracted to the positively charged glass particles and were adsorbed on them. The suspension was then spray dried and the coated glass beads were used for shaping of the seal.

### Step 3: Shaping of the seal

Coated glass seals were suspended in terpineol and screen printed in appropriate dimensions. These seals were then used in fabrication of the SOEC stack.

### Example 11: Seal based on CAS-1 coated with CeO₂

### Step 1: Coating of CeO₂ particles

CeO₂ powders were suspended in a binder solution (ethanol + polyvinylbutyral) and spray dried. The resulting agglomerates were ball milled such that the median particle diameter was 0.5 µm.

### Step 2: Coating of glass beads

Suspensions with positively charged glass beads (CAS-1) were prepared by suspending 20 µm glass beads in water mixed with 1 wt% (glass basis) polyethyleneimine (PEI). Suspensions with negatively charged CeO₂ particles (particles from step 1) were prepared by suspending particles prepared in step 1 in water at a pH of 9 (by addition of NH₄OH). These two suspensions were mixed under light stirring. The negatively charged CeO₂ particles were attracted to the positively charged glass particles and were adsorbed on them. The suspension was then spray dried and the coated glass beads were used for shaping of the seal.

### Step 3: Shaping of the seal

Coated glass seals were suspended in terpineol and screen printed in appropriate dimensions. These seals were then used in fabrication of the SOEC stack.

### Example 12: Seal based on CAS-1 coated with metal particles

### Step 1: Coating of metal particles

Metal (Fe-Cr alloy) powders were suspended in a binder solution (ethanol + polyvinylbutyral) and spray dried. The resulting agglomerates were ball milled such that the median particle diameter was 10 µm.

### Step 2: Coating of glass beads

Suspensions with negatively charged glass beads (CAS-1) were prepared by suspending 50 µm glass beads in water at a pH of 8. Suspensions with positively charged metal particles (particles from step 1) were prepared by suspending particles prepared in step 1 in water with 1 wt% (glass basis) polyethyleneimine (PEI). These two suspensions were mixed under light stirring. The positively charged metal particles were attracted to the negatively charged glass particles and were adsorbed on them. The suspension was then spray dried and the coated glass beads were used for shaping of the seal.

### Step 3: Shaping of the seal

Coated glass seals were suspended in terpineol and screen printed in appropriate dimensions. These seals were then used in fabrication of the SOEC stack.

## Claims

1. Sealing composition for solid oxide cell stacks, comprising glass particles coated with particles of a ceramic material and/or a metallic material, wherein the average particle size of said glass particles is at least ten times the particle size of said particles of the ceramic material or the metallic material.

2. The sealing composition of claim 1, wherein the particles of the ceramic material are selected from the group consisting of doped or un-doped zirconia, alumina, ceria, aluminum oxide, magnesium oxide, titanium oxide, NiAl₂O₄, and mixtures thereof.

3. The sealing composition of claim 1, wherein the particles of the metallic material are selected from the group consisting of Fe_{1-x-y}CrₓMa_{y} alloys, wherein Ma is Ni, Ti, Ce, Mn, Mo, W, Co, La, Y, or Al, and mixtures thereof.

4. The sealing of any of claims 1 to 3, wherein the glass particles are silica based glass particles.

5. The sealing layer of any of claims 1 to 4, wherein the glass particles have an average particle diameter of from 10 to 1000 µm.

6. A solid oxide cell stack, comprising at least two SOC cells which comprise an electrolyte layer, a cathode layer, an anode layer, and
wherein the stack is sealed by the sealing composition of any of claims 1 to 5.

7. A method of producing the solid oxide cell stack of claim 6, comprising the steps of:
- providing at least two SOC cells comprising an electrolyte layer sandwiched by electrode layers or electrode precursor layers;
- stacking at least two cells so as to form a cell stack; and
- sealing said cell stack with a sealing composition,
wherein the sealing composition is the sealing composition of any of claims 1 to 5.

8. The method of claim 7, wherein the sealing composition is applied by screen printing.

9. The method of claim 7, wherein the sealing composition is applied in form of sheets.

10. The method of any of claims 7 to 9, further comprising the step of impregnation the fist electrode precursor layer and/or second electrode precursor layer with a catalyst or catalyst precursor material.
